## Europäisches Patentamt
## European Patent Office
## Office européen des brevets

(19)

(11) Veröffentlichungsnummer: **0 135 950**
**B1**

(12) # EUROPÄISCHE PATENTSCHRIFT

(45) Veröffentlichungstag der Patentschrift:
06.06.88

(21) Anmeldenummer: 84201069.6

(22) Anmeldetag: 18.07.84

(51) Int. Cl.⁴: **C 22 B 15/12,** C 22 B 11/08,
C 22 B 3/00, C 01 G 3/12,
C 01 G 5/00, C 01 G 7/00

(54) Verfahren zur Gewinnung von Kupfer sowie gegebenenfalls Silber und Gold durch Laugung oxidischer und sulfidischer Materialien mit wasserlöslichen Cyaniden.

(30) Priorität: 26.08.83 DE 3330795

(43) Veröffentlichungstag der Anmeldung:
03.04.85 Patentblatt 85/14

(45) Bekanntmachung des Hinweises auf die Patenterteilung:
08.06.88 Patentblatt 88/23

(84) Benannte Vertragsstaaten:
BE DE FR GB IT SE

(56) Entgegenhaltungen:
FR-A-396 170
FR-A-1 436 917
GB-A-1 050 303
US-A-1 654 918
US-A-3 189 435
US-A-3 224 835
US-A-3 303 021
US-A-3 347 662
US-A-3 429 694
US-A-3 443 893
US-A-3 791 817

Die Akte enthält technische Angaben, die nach
dem Eingang der Anmeldung eingereicht wurden
und die nicht in dieser Patentschrift enthalten sind.

(73) Patentinhaber: MNR REPROCESSING, INC., 100
West Tenth Street, Wilmington Delware 19801
(US)

(72) Erfinder: Potter, George M., 40 South Calcite
Avenue, Tucson Arizona 85745 (US)
Erfinder: Bergmann, Arthur, Dr., Meggener
Strasse 10, D-5940 Lennestadt 17 (DE)
Erfinder: Haidlen, Ulrich, Unter den Klippen 24,
D-5940 Lennestadt 1 (DE)

(74) Vertreter: Rieger, Harald, Dr., Reuterweg 14,
D-6000 Frankfurt am Main (DE)

EP 0 135 950 B1

## Beschreibung

Die Erfindung betrifft ein Verfahren zur Gewinnung von Kupfer sowie gegebenenfalls Silber und Gold aus diese Metalle enthaltenden sulfidischen und oxidischen Materialien durch Laugung mit wasserlöslichen Cyaniden.

Aus GB-A-1 050 303 ist es bekannt, sulfidische Kupfererze, wie Chalkozit ($Cu_2S$), oder oxidische Kupfererze, wie Malachit $Cu_2(OH)_2CO_3$ oder Azurit $CuCO_3.Cu(OH)_2$, in wäßriger Dispersion mit wasserlöslichen Cyaniden, wie Natriumcyanid, in alkalischem Milieu zu behandeln und das Kupfer in komplexer Form, z. B. als Natriumkupfercyanid $Na_2Cu(CN)_3$, aus den Laugungsmaterialien herauszulösen. Die von dem Feststoff abgetrennten cyanidischen Lösungen werden mit wasserlöslichen sulfidischen Verbindungen, wie Alkali- oder Erdalkalisulfid oder -hydrogensulfid, versetzt. Nach Einstellung eines p-Wertes von weniger als 5 durch Zusatz von z. B. Schwefelsäure fällt das Metallsulfid, wird Kupfersulfid und Silbersulfid, rasch aus. Der Niederschlag wird filtriert. In das Filtrat, das freie Blausäure enthält, wird zwecks deren Rückgewinnung ein Gasstrom, wie Luft oder Dampf, eingeleitet und die Blausäure ausgetrieben. Die verflüchtigte Säure wird entweder kondensiert oder in Alkalilösungen eingeleitet und der Wiederverwendung zugeführt. Das Verfahren wird im allgemeinen bei Umgebungstemperaturen und Normaldruck ausgeführt. Ausgenommen die Blausäurerückgewinnung, soll das Verfahren auch bei erhöhtem Druck, allerdings in wenig wirtschaftlicher Weise, ausführbar sein.

Im vorbekannten Verfahren muß die Blausäure mit großen Gasstrommengen ausgeblasen und in einem zweiten Schritt in Alkali- oder Erdalkalicyanid zwecks Wiederverwendung umgewandelt werden. Ein solches Verfahren ist sehr aufwendig sowohl hinsichtlich der Investitionskosten als auch hinsichtlich der Kosten des laufenden Betriebes.

Nach dem aus US-A-3 224 835 bekannten Verfahren wird sulfidisches Kupfererz mit Calciumcyanidlösung gelaugt und die Fällung des Kupfers in zwei Stufen und unter Druck ausgeführt. Aus dem Filtrat der Druckfiltration wird die Blausäure durch Strippen ausgetrieben.

Der Erfindung liegt die Aufgabe zugrunde, die im Verlauf eines Verfahrens der Cyanidlaugung von kupfer- sowie ggf. edelmetallhaltiger Materialien bzw. Rohstoffen anfallenden, gebundenes Cyan enthaltenden Filtratwässer in wirtschaftlicher Weise aufzuarbeiten und in den Kreislauf des Verfahrens zu integrieren. Des weiteren soll die Gewinnung der das Kupfer in den Rohstoffen gegebenenfalls begleitenden Edelmetalle Gold und Silber in einfacher Weise aus der Cyanidlauge durch Trennung ermöglicht bzw. verbessert werden.

Die Aufgabe wird gelöst, indem ein Verfahren der eingangs genannten Art gemäß der Erfindung in der Weise ausgestaltet wird, daß in einem einstufigen Verfahren die Verfahrensstufen Fällung und Filtration des Metallsulfids bei einem Druck von 1,5 bis 4 bar bei Raumtemperatur ausgeführt werden und die Metallsulfid-Fällung mit Natriumsulfid oder Natriumhydrogensulfid bei einem pH-Wert von 1,5 bis 2,0 vorgenommen wird, die Rückgewinnung der im Filtrat enthaltenen freien Blausäure durch Umsetzen mit Oxiden, Hydroxiden oder Carbonaten der Alkali- oder Erdalkalimetalle unter Druck vorgenommen und das gebildete Alkali- oder Erdalkalicyanid in die Laugungsstufe rezirkuliert wird.

Die Temperatur wird in diesen Verfahrensstufen praktisch auf Umgebungstemperatur gehalten innerhalb jahreszeitlicher Schwankungen.

Die neben Kupfer gegebenenfalls noch Silber und Gold enthaltende Cyanidlauge wird gemäß der Erfindung unter erhöhtem Druck in intensive Mischung mit dem wasserlöslichen sulfidischen Fällungsreagenz gebracht. Diese innige Vermischung wird vorteilhaft unter Verwendung von Flüssigkeitsintensivmischern oder -rührern erzielt, wie Rohrmischern mit Einbauten, wie Schikanen oder drehbaren Wendeln. In derartigen Vorrichtungen wird gemäß der Erfindung die wäßrige Lösung des Fällungsreagenzes im Bereich des Einlaufs der Cyanidlauge unter Druck eingespeist, während die Einstellung eines pB-Wertes von 1,5 bis 2,0 durch einen unter Druck erfolgenden Säurezusatz im Bereich des Auslaufs des Reaktionsmediums erfolgt. Die intensive Vermischung wird in Bruchteilen von Sekunden herbeigeführt und das Kupfersulfid, gegebenenfalls zusammen mit Edelmetallsulfiden, ausgefällt. Der Niederschlag wird filtriert, zweckmäßig über ein Druckfilter mit Vorfilterschicht aus z. B. Diatomeenerde. In dem unter Druck abfließenden sauren Filtrat ist freie Blausäure enthalten. Die Menge der zurückzugewinnenden freien Blausäure hängt von mehreren Faktoren ab. Sofern zweiwertiges Eisen in der Cyanidlauge zugegen ist, liegt dieses in Form des praktisch nicht zerstörbaren Eisencyanokomplexes $[Fe(CN)_6]^{4-}$ vor. Wird das Fällungsreagenz im Überschuß verwendet, bilden sich stabile Thiocyanate (Rhodanide). In beiden Fällen wird dieses Cyan der Rückgewinnung entzogen. Es ist daher zweckmäßig, den Rohstoff bzw. das Erz einer oxidativen Behandlung vor dem Laugungsprozeß zu unterziehen und ferner auch tunlichst einen Überschuß des Fällungsreagenzes zu vermeiden.

Das freie Blausäure enthaltende Filtrat der Metallsulfidfällung wird unter Druck mit einer wäßrigen Lösung oder Suspension eines alkalischen Stoffes, wie eines Oxids, Hydroxids oder Carbonats der Alkali- oder Erdalkalimetalle, umgesetzt. Auch in dieser Stufe werden die flüssigen Medien zweckmäßig in einem Rohrmischer zusammengeführt; der erhöhte Druck im Rohrmischer wie auch die kräftige Turbulenz begünstigen die Umsetzungsreaktion. Mit Vorteil wird Kalkmilch in das Mischrohr unter Druck eingeführt und die freie Blausäure in ihr wasserlösliches Calciumsalz Ca(CN)$_2$ übergeführt. Die behandelte Lösung tritt aus dem Rohrmischer, über ein entsprechendes Drosselventil mit einem pH-Wert von über 8, zweckmäßig über 10, aus. Sofern noch Feststoffe in der Lösung des z. B. Calciumcyanids vorhanden sind, beispielsweise Calciumsulfat, erfolgt vor der Rezirkulation noch eine Abtrennung dieser Stoffe.

Es ist somit festzuhalten, daß in dem erfindungsgemäßen Verfahren Metallsulfidfällung, Abtrennung des Metallsulfidniederschlages und Rückgewinnung der Blausäure in geschlossenen Verfahrensstufen erfolgen und die rückgewonnene Blausäure erst dann in Form ihrer löslichen Alkali- oder Erdalkalicyanide aus der geschlossenen Vorrichtung austritt, wenn der pH-Wert genügend hoch liegt, um eine Gefährdung der Umwelt durch freie Blausäure auszuschließen.

Mit dem erfindungsgemäßen Verfahren können mit Vorteil auch solche Kupferrohstoffe aufgearbeitet werden, die Edelmetalle, wie Silber und Gold, enthalten. Beispielsweise können Silber und Gold gemeinsam aus der Kupfercyanidlauge gewonnen werden, wenn die Rohlauge nach Klärung und Abtrennung von Feststoffen mit Aktivkohle behandelt wird, an welcher das in Form der Komplexe [Au(CN)$_2$]$^-$ und [Ag(CN)$_2$]$^-$ vorliegende Gold und Silber adsorbiert wird und der weiteren Aufarbeitung zugeführt werden kann. Diese Abtrennung erfolgt zweckmäßig in der Weise, daß die geklärte Lauge eine Adsorptionskolonne durchläuft, beispielsweise eine mit Aktivkohle gefüllte Kolonne. Die von Silber und Gold befreite Kupfercyanidlösung wird sodann den Behandlungsstufen Fällung, Filtration und Cyan-Rückgewinnung unterzogen.

In einer weiteren Ausführungsform des erfindungsgemäßen Verfahrens können das Gold und Silber auch für sich abgetrennt werden. In diesem Fall wird die geklärte Kupfercyanidlauge, die Gold und Silber enthält, zwecks vorgängiger Abtrennung des Silbers im alkalischen Bereich bei hohen pH-Werten mit z. B. Natriumsulfid versetzt und das Silbersulfid ausgefällt und abgetrennt. Das Kupfer und Gold enthaltende Filtrat wird sodann mit Aktivkohle behandelt und das Gold hieran adsorbiert. Zweckmäßig durchläuft das Filtrat bei dieser Behandlung eine mit Aktivkohle gefüllte Kolonne. Die aus der Kolonne austretende Lösung wird der Fällungsstufe zugeführt und Kupfer im stark sauren Milieu ausgefällt und das Kupfersulfid abgetrennt. In dem Filtrat der Kupfersulfidfällung wird die freie Blausäure durch Umsetzung mit Oxiden, Hydroxiden oder Carbonaten der Alkali- oder Erdalkalimetalle gebunden und die Lösung in die Laugungsstufe rezirkuliert.

Die Cyanidlaugung der ggf. Silber und Gold enthaltenden Kupfermaterialien kann nach an sich bekannten Methoden der Sickerlaugung oder der Rührlaugung vorgenommen werden. Bei ersterer durchläuft die kontinuierlich oben aufgegebene Cyanidlauge das zu einfachen Haufen von mehreren Metern aufgeschüttete, im allgemeinen relativ grobkörnige Material eines Bereichs von etwa 15 mm bis 1 m. Die mit den Metallsalzen beladene Lösung wird unten abgezogen. Die Sickerlaugung kann auch in Bottichen erfolgen, die im allgemeinen einen Filterboden besitzen, auf den das zu laugende Gut einer Körnung von üblicherweise bis 15 mm eingeschüttet ist. Aufgrund der feineren Körnung ergibt sich eine Laugungszeit der behandelbaren Erze von etwa nur 5 bis 12 Tagen gegenüber einer Laugungszeit von 2 bis 3 Wochen bei einfacher Haufenlaugung gröberer Erze. Bei der Sickerlaugung fällt in vorteilhafter Weise eine praktisch feststofffreie Cyanidlauge an, wie auch diese Laugungstechnik relativ geringe Investitionskosten erfordert. Bei feiner verwachsenen Erzen ist es erforderlich, das Erz auf eine Korngröße von 0,2 mm oder kleiner zu mahlen. Bei dieser Kornfeinheit kann die Laugung allein als Rührlaugung durchgeführt werden, es sei denn, es wird eine Agglomerationsbehandlung vorgenommen. Bei der Rührlaugung betragen die Laugezeiten im allgemeinen 10 bis 70 Stunden. Die Trennung von Feststoff und Metallcyanid enthaltender Lösung erfolgt hierbei durch Filtration.

Die Erfindung wird anhand des Fließschemas und des Beispiels näher und beispielhaft erläutert. Das Fließschema berücksichtigt die Ausführungsform des erfindungsgemäßen Verfahrens, die auch die Gewinnung von Gold und Silber aus den zu laugenden Kupferrohstoffen vorsieht.

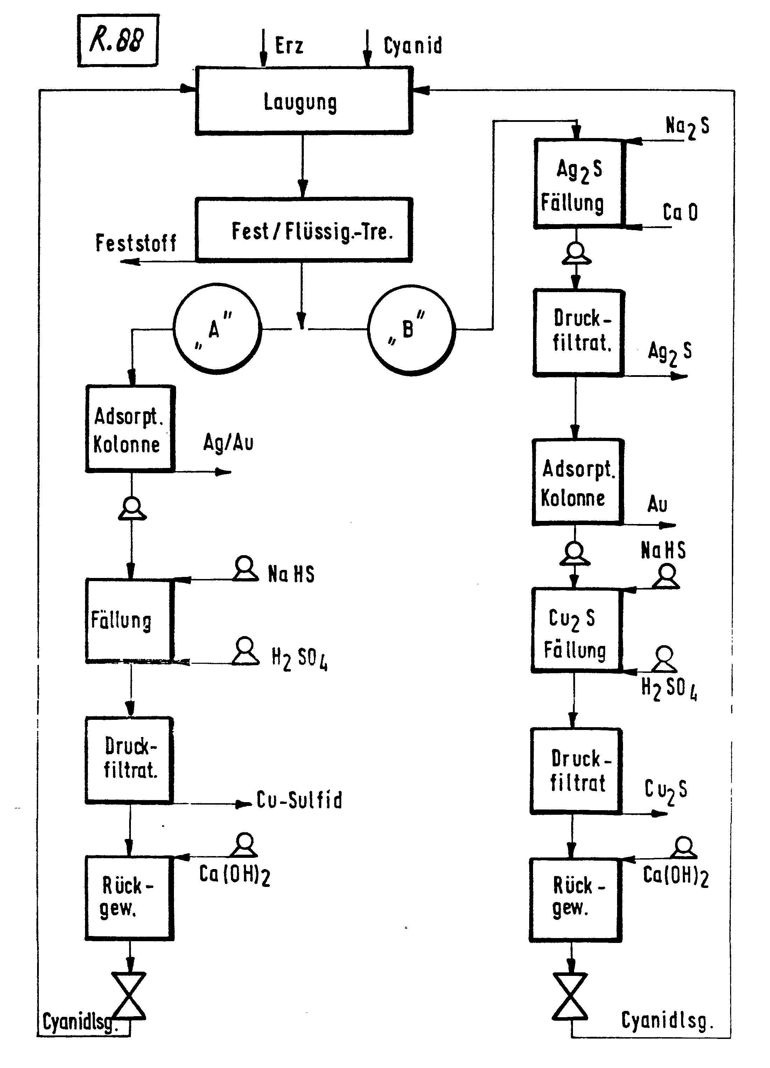

Gemäß der Ausführungsform "A" der Abbildung durchläuft die von der Gangart getrennte Laugungsflüssigkeit eine Adsorptionskolonne, beispielsweise eine Säule mit Aktivkohle zur Abtrennung von Silber und Gold aus der Kupfercyanidlauge durch Adsorption. Alternativ können aber auch andere bekannte Gewinnungsverfahren angewendet werden, beispielsweise Adsorption an Ionenaustauscherharzen, Lösungsmittelextraktion, Fällung mit Zinkstaub nach dem Merrill-Crowe-Verfahren. Die beladene Laugungsflüssigkeit wird dann unter kräftiger Mischung mit dem wasserlöslichen sulfidischen Fällungsmittel unter erhöhtem Druck zusammengeführt. Alternativ kann das wasserlösliche Sulfid mit der Laugungsflüssigkeit in einem Behälter (nicht gezeichnet) vor dem Eintritt in das Drucksystem gemischt werden. Der heftige Mischvorgang wird zweckmäßig mit Intensivmischern oder Intensivrührern vorgenommen, wie Rohrmischern mit Einbauten, wie feststehenden Schikanen oder drehbaren Wendeln. Gemäß dem erfindungsgemäßen Verfahren wird die wäßrige Lösung des Fällungsmittels, wie NaHS, dem Mischer unter Druck im Bereich des Einlasses der Cyanidlösung zugeführt. Alternativ kann auch die vorgemischte sulfidhaltige Lösung dem Mischer unter Druck zugeführt werden. Der pH-Wert von 1 bis 3 wird durch Zusatz von Schwefelsäure eingestellt, die unter Druck im Bereich des Auslasses des Reaktionsmediums eingeführt wird.

Eine intensive Mischung wird schnell herbeigeführt und das Kupfersulfid ausgefällt oder gemeinsam mit den Edelmetallsulfiden ausgefällt. Der Niederschlag wird unter Druck abfiltriert, zweckmäßig über ein Druckfilter mit Vorfilterschicht aus z. B. Diatomeenerde. Das Filtrat der Metallsulfidfällung wird in einem Rohrmischer zweckmäßig mit Kalkmilch unter erhöhtem Druck behandelt und die freie Blausäure in ihr wasserlösliches Calciumsalz übergeführt. Die behandelte Lösung tritt aus dem Drucksystem über ein Drosselventil mit einem pH-Wert von mehr als 8 und zweckmäßig mehr als 10 aus und wird rezirkuliert.

Gemäß der Ausführungsform "B" der Abbildung wird in der geklärten Kupfercyanidlauge, die Silber und Gold enthält, das Silbersulfid in basischem Milieu ausgefällt und unter Druck abfiltriert. Das Filtrat wird durch eine Adsorptionskolonne, wie Säule mit Aktivkohle, geleitet, wo die Adsorption von Gold erfolgt. Alternativ können auch bereits zuvor erwähnte andere bekannte Abtrennverfahren angewendet werden. Druckfällung und Druckfiltration des Kupfersulfids, Cyan-Rückgewinnung unter erhöhtem Druck sowie die Rezirkulierung erfolgen wie unter der Ausführungsform "A" beschrieben.

Die Vorteile des Verfahrens der Erfindung sind darin zu sehen, daß aufgrund der hohen Rückgewinnungsraten des Cyans von mehr als 90 und bis zu 95 % ein sehr wirtschaftliches Verfahren für Kupfererze bzw. Kupfer enthaltende Rohstoffe zur Verfügung steht, insbesondere für carbonatische Kupfererze. Darüber hinaus lassen sich in einfacher Weise auch bei edelmetallhaltigen Kupfererzen diese wertvollen Inhaltstoffe, wie Gold und Silber aus den Erzen durch Cyanidlaugung herauslösen und in wirtschaftlicher Weise durch Abtrennung gewinnen.

**Beispiel 1**

1 kg oxidisches, karbonatisches Kupfererz (Malachit/Azurit) mit einem Gehalt von

0,58 % Cu, 2,0 g/t Au, 50 g/t Ag

wurde nach Brechen auf eine Korngröße von kleiner als 10 mm in einem am unteren Ende mit einem Sieb abgeschlossenen Glasrohr während 10 Tagen mit einer 36 g NaCN/l enthaltenden Lösung gelaugt. Eine Laugenmenge von 0,33 l wurde so lange umgepumpt, bis keine Zunahme der Cu-Konzentration feststellbar war. Dies war nach 10 Tagen der Fall. Geringe Mengen von suspendierten Feststoffteilchen aus dem Erz wurden durch Filtration entfernt. Die Lauge enthielt: 10,5 g/l Cu, 4,8 mg/l Au, 120 mg/l Ag.

Unter Berücksichtigung der Laugen- und Feststoffmengen wurden 70 % des Kupfers und 80 % der Edelmetalle durch die beschriebene simulierte Haufenlaugung in Lösung gebracht.

Die Lauge wurde anschließend über Aktivkohlefilter (Kolonnen) geführt und die Edelmetalle in bekannter Weise durch Adsorption an Aktivkohle gewonnen. An der Aktivkohle wird auch ein Teil des gelösten Kupfers adsorbiert, der jedoch umso geringer wird, je mehr Edelmetalle an der Kohle adsorbiert sind. Ca. 10 % des Kupferinhaltes und 95 % der Edelmetalle werden an der Aktivkohle adsorbiert.

Durch die Adsorption an Kohle verringert sich der die Aktivkohle-Kolonnen verlassende Metallgehalt in der Lauge auf 9,45 g/l Cu, 0,24 mg/l Au und 6,00 mg/l Ag.

Die Lauge wurde anschließend über eine Pumpe in eine Vorrichtung unter Druck eingespeist, bestehend aus einem ersten Rohrmischer, einem nachgeschalteten Filter mit Vorfilterschicht aus Diatomeenerde und einem dem Filter nachgeschalteten zweiten Rohrmischer. In den ersten Rohrmischer wurden im Bereich des Eintritts der unter einem Druck von 2 bar stehenden Lauge zusätzlich 4 g NaHS in Form einer 20-%-igen Lösung eingeführt. Im Bereich der Austrittszone der Lauge erfolgte sodann eine Einstellung des pH-Wertes auf 1,8 durch Zusatz von 15 g konzentrierter Schwefelsäure unter Druck. Der sofort sich bildende Niederschlag aus Kupfersulfid wurde in dem nachgeschalteten Druckfilter abgetrennt und das Filtrat in den nachgeschalteten zweiten Rohrmischer übergeführt. In diesem zweiten Rohrmischer wurde das freie Blausäure enthaltende Filtrat unter Druck mit 150 ml Kalkmilch (20-%-ige Suspension) versetzt und ein pH-Wert von 10,5 eingestellt. Von dem gebildeten löslichen Calciumcyanid wurden geringe Mengen Calciumsulfat abgetrennt und das Calciumcyanid einer weiteren Verwendung zugeführt.

Der Filterkuchen der Metallsulfide enthielt neben 10 g Diatomeenerde 3,9 g eines Cu-Niederschlags mit 74 % Cu, 20 % S und geringen Mengen Ag und Au. Das Filtrat der Metallsulfidfällung hatte bei einem pH-Wert von 10,5 Konzentrationen von 62,5 mg/l Cu, ca. 0,01 mg/l Au, 0,3 mg/l Ag und 11,5 g/l CN. Die Menge des Filtrats betrug 0,5 l.

**Beispiel 2**

Es wurde 1 kg oxidisches, karbonatisches Kupfererz (Malachit/Azurit) mit einem Gehalt von

0,5 % Cu, 2,0 g/t Au, 50 g/t Ag

entsprechend der Arbeitsweise des Beispiels 1 gelaugt.

Die Lauge enthielt: 10,5 g/l Cu, 4,8 g/t Au und 120 mg/l Ag. Zur Abtrennung des Silbers wurde die Lauge mit 250 g CaO pro Tonne Lösung, entsprechend 0,08 g CaO, und 0,87 g Na₂S pro Gramm Ag, entsprechend 0,034 g Na₂S, versetzt und während 1 Stunde gerührt. Anschließend wurde die konditionierte Lauge in einem Druckfilter mit Vorfilterschicht aus Diatomeenerde filtriert. Der Filterkuchen enthielt neben 10 g Diatomeenerde und Kalk 0,05 g eines Silberniederschlags. Das Silberausbringen betrug 99 %.

Das Laugenfiltrat wurde anschließend über Aktivkohle-Kolonnen geführt und Gold in bekannter Weise durch Adsorption an Aktivkohle gewonnen. An der Aktivkohle wird auch ein Teil des Kupfers adsorbiert, der jedoch umso geringer wird, je mehr Gold an der Kohle adsorbiert ist. Etwa 10 % des Kupferinhalts der Aufgabe zur Aktivkohlen-Kolonne und über 95 % des Goldinhaltes wurden an der Aktivkohle adsorbiert.

Die an Edelmetallen praktisch freie Lauge wurde anschließend über eine Pumpe in eine Vorrichtung unter Druck eingespeist, bestehend aus einem ersten Rohrmischer, einem nachgeschalteten Filter mit Vorfilterschicht aus Diatomeenerde und einem dem Filter nachgeschalteten zweiten Rohrmischer. In den ersten Rohrmischer wurden im Bereich des Eintritts der unter einem Druck von 2 bar stehenden Lauge zusätzlich 4 g NaHS in Form einer 20-%-igen Lösung eingeführt. Im Bereich der Austrittszone der Lauge erfolgte sodann eine Einstellung des pH-Wertes auf 1,8 durch Zusatz von 15 g konzentrierter Schwefelsäure unter Druck. Der sofort sich bildende Niederschlag aus Kupfersulfid wurde in dem nachgeschalteten Druckfilter abgetrennt und das Filtrat in den nachgeschalteten zweiten Rohrmischer übergeführt. In diesem zweiten Rohrmischer wurde das freie Blausäure enthaltende Filtrat unter Druck mit 150 ml Kalkmilch (20-%-ige Suspension) versetzt und ein pH-Wert von 10,5 eingestellt. Von dem gebildeten löslichen Calciumcyanid wurden geringe Mengen Calciumsulfat abgetrennt und das Calciumcyanid einer weiteren Verwendung zugeführt.

Der Filterkuchen der Metallsulfide enthielt neben 10 g Diatomeenerde 4,2 g eine Cu-Niederschlags mit 74 % Cu und 20 % S sowie geringe Mengen an Edelmetallen. Das Filtrat der Metallsulfidfällung hatte bei einem pH-Wert von 10,5 Konzentrationen von 62,4 mg/l Cu, ca. 0,01 mg/l Au, ca. 0,01 mg/l Ag und 11,5 g/l CN. Die Menge des Filtrats betrug 0,5 l.

Bezogen auf den gesamten Prozess, werden nahezu 100 % der Metalle Cu, Ag, Au aus der Lauge gewonnen. 90,4 % des als Laugungsmittel zugesetzten Cyans werden als Calciumcyanid zurückgewonnen.

## Patentansprüche

1. Verfahren zur Gewinnung von Kupfer sowie gegebenenfalls Silber und Gold aus diese Metalle enthaltenden sulfidischen und oxidischen Erzen, Konzentraten, Abfallprodukten oder Schlacken, durch Behandlung der feinteiligen Stoffe mit wäßriger Lösung eines Alkali- oder Erdalkalicyanids, Fällen des Metallsulfids in der gegebenenfalls filtrierten Extraktionslösung unter erhöhtem Druck durch Zusatz einer wasserlöslichen sulfidischen Verbindung mit anschließendem Ansäuern auf einen pH-Wert unter 5, Filtration des Metallsulfids unter erhöhtem Druck sowie Rückgewinnung der gebildeten Blausäure, dadurch gekennzeichnet, daß in einem einstufigen Verfahren die Verfahrensstufen Fällung und Filtration des Metallsulfids bei einem Druck von 1,5 bis 4 bar bei Raumtemperatur ausgeführt werden und die Metallsulfid-Fällung mit Natriumsulfid oder Natriumhydrogensulfid bei einem pH-Wert von 1,5 bis 2,0 vorgenommen wird, die Rückgewinnung der im Filtrat enthaltenen freien Blausäure durch Umsetzen mit Oxiden, Hydroxiden oder Carbonaten der Alkali- oder Erdalkalimetalle unter Druck vorgenommen und das gebildete Alkali- oder Erdalkalicyanid in die Laugungsstufe rezirkuliert wird.

2. Verfahren nach Anspruch 1, dadurch gekennzeichnet, daß die Metallsulfidfällung und die Umsetzungsreaktion der Blausäure mit einem alkalischen Stoff in einem Rohrmischer durchgeführt werden.

3. Verfahren nach den Ansprüchen 1 bis 2, dadurch gekennzeichnet, daß in der geklärten, Silber und Gold enthaltenden Kupfercyanidlauge das Silber und Gold durch Adsorption an Aktivkohle entfernt und die Kupfercyanidlösung der Fällungsstufe mit anschließender Filtration des Kupfersulfids und Rückgewinnung des Cyans zugeführt wird.

4. Verfahren nach den Ansprüchen 1 bis 2, dadurch gekennzeichnet, daß in der geklärten, Silber und Gold enthaltenden Kupfercyanidlösung das Silber in alkalischem Milieu als Sulfid gefällt und abgetrennt wird, aus dem Filtrat das Gold durch Adsorption an Aktivkohle entfernt wird, aus der Kupfercyanidlösung in saurem Milieu das Kupfersulfid gefällt und abgetrennt wird, worauf im Filtrat die Blausäure durch Umsetzung mit einem alkalischen Stoff zurückgewonnen wird.

## Claims

1. Process for recovering copper and optionally recovering silver and gold from sulphide and oxide ores, concentrates, waste products or slags containing these metals, through treatment of the fine particulate substances with an aqueous solution of an alkali cyanide or alkaline earth cyanide, precipitation of the metal sulphide in the optionally filtered extraction solution under increased pressure through the addition of a water-soluble sulphide compound with subsequent acidification to a pH value below 5, filtration of the metal sulphide under increased pressure and recovery of the hydrocyanic acid which is formed, characterized in that in a single-staged process, the process steps of precipitation and filtration of the metal sulphide are performed at a pressure of from 1.5 to 4 bar at ambient temperature, and the metal sulphide precipitation is carried out with sodium sulphide or sodium hydrogen sulphide at a pH-value of from 1.5 to 2.0, the recovery of the free hydrocyanic acid contained in the filtrate is carried out by reaction with oxides, hydroxides or carbonates of the alkali metals or alkaline earth metals under pressure, and the alkali cyanide or alkaline earth cyanide which is formed is recycled into the leaching stage.

2. Process according to Claim 1, characterized in that the metal sulphide precipitation and the conversion reaction of the hydrocyanic acid with an alkaline substance are carried out in an in-line mixer.

3. Process according to Claims 1 to 2, characterized in that in the clarified copper cyanide lye solution which contains silver and gold, the silver and gold are removed by adsorption on activated carbon, and the copper cyanide solution is supplied to the precipitation stage with subsequent filtration of the copper sulphide and recovery of the cyanogen.

4. Process according to Claims 1 to 2, characterized in that in the clarified copper cyanide solution which contains silver and gold, the silver is precipitated as sulphide under alkaline conditions and is separated, the gold is removed from the filtrate by adsoprtion on activated carbon, the copper sulphide is precipitated out of the copper cyanide solution under acid conditions and is separated, after which the hydrocyanic acid in the filtrate is recovered by reaction with an alkaline substance.

## Revendications

1. Procédé d'extraction de cuivre, ainsi que, le cas échéant, d'argent et d'or, de minerais, de produits concentrés, de déchets ou de scories, sulfurés et oxydés contenant ces métaux, en traitant les substances à l'état finement divisé par une solution aqueuse d'un cyanure de métal alcalin ou d'un cyanure de métal alcalino-terreux, en précipitant le sulfure métallique dans la solution d'extraction, éventuellement filtrée, sous une pression élevée, par addition d'un composé sulfuré soluble dans l'eau, suivie d'une acidulation à un pH inférieur à 5, en filtrant le sulfure métallique sous une pression élevée, ainsi qu'en récupérant l'acide prussique formé, caractérisé en ce qu'il consiste à effectuer, dans un procédé en un stade unique, les stades du procédé de précipitation et de filtration du sulfure métallique sous une pression de 1,5 à 4 bar et à la température ambiante, et à effectuer la précipitation du sulfure métallique par du sulfure de sodium ou par de l'hydrogénosulfure de sodium, à un pH de 1,5 à 2,0, à effectuer sous pression la récupération de l'acide prussique libre contenu dans le filtrat par réaction sur des oxydes, des hydroxydes ou des carbonates des métaux alcalins ou alcalino-terreux, et à remettre en circulation, au stade de lixiviation, le cyanure de métal alcalin ou de métal alcalino-terreux formé.

2. Procédé suivant la revendication 1, caractérisé en ce qu'il consiste à effectuer la précipitation du sulfure métallique et la réaction de déplacement de l'acide prussique par une substance alcaline dans un mélangeur tubulaire.

3. Procédé suivant la revendication 1 ou 2, caractérisé en ce qu'il consiste à éliminer, par adsorption sur charbon actif, l'argent et l'or de la liqueur de cyanure de cuivre clarifiée qui en contient et à envoyer la solution de cyanure de cuivre au stade de précipitation, en filtrant ensuite le sulfure de cuivre et en récupérant le cyanure.

4. Procédé suivant la revendication 1 ou 2, caractérisé en ce qu'il consiste à précipiter et à séparer, dans la solution de cyanure de cuivre clarifiée contenant de l'argent et de l'or, l'argent en milieu alcalin sous la forme du sulfure, à éliminer l'or du filtrat par adsorption sur charbon actif, à précipiter et à séparer le sulfure de cuivre en milieu acide de la solution de cyanure de cuivre, l'acide prussique étant récupéré dans le filtrat par réaction sur une substance alcaline.

0 135 950

R.88

Erz    Cyanid

Laugung

Fest / Flüssig.-Tre.

Feststoff

„A"    „B"

Adsorpt. Kolonne    Ag/Au

Fällung    NaHS    H₂SO₄

Druck-filtrat.    Cu-Sulfid

Rück-gew.    Ca(OH)₂

Cyanidlsg.

Ag₂S Fällung    Na₂S    CaO

Druck-filtrat.    Ag₂S

Adsorpt. Kolonne    Au

Cu₂S Fällung    NaHS    H₂SO₄

Druck-filtrat    Cu₂S

Rück-gew.    Ca(OH)₂

Cyanidlsg.

1